# EUROPEAN PATENT APPLICATION

(11) **EP 4 205 868 A1**
(43) Date of publication of application: **05.07.2023**
(21) Application number: 22217150.6
(22) Date of filing: 29.12.2022
(51) Int. Cl.: B08B 9/055, B29B 7/80, B29B 7/00, B29B 7/16

(54) **METHOD AND DEVICE FOR MANUFACTURING AND TRANSPORTING A POLYOL COMPOSITION**

(30) Priority: 30.12.2021 BE 202106110
(71) Applicant: Soudal N.V., 2300 Turnhout (BE)
(72) Inventor: GOOR, Kris, 2300 Turnhout (BE); MARIËN, Joey, 2300 Turnhout (BE)
(74) Representative: Brantsandpatents bv

(57) **Abstract**

Method and a device for manufacturing and transporting a polyol composition, wherein one or more polyols and one or more additional components are placed in a mixing tank with an agitator and mixed to form a polyol composition, wherein the polyol composition is subsequently transported from the mixing tank to a filling device by means of transport conduits, wherein the cleaning of the aforementioned transport conduits takes place by means of the displacement of one or more pigs in these transport conduits.

## Description

### TECHNICAL FIELD

The invention relates to a method and a device for manufacturing and transporting a polyol composition.

### PRIOR ART

Production of polymer compositions usually takes place by mixing the various components in a mixing tank, followed by the transport of the mixture to a filling device, where the polymer composition is filled into a receptacle. The transport of the polymer composition between the mixing tank and the filling device usually takes place via transport conduits. These conduits require regular cleaning. Since the device is preferably used for mixing and filling different polymer compositions, cleaning must for instance take place when changing from a first polymer composition to the next. A well-known cleaning method is chemical cleaning where the conduits are cleaned with chemicals. Usually, the transport conduits are cleaned by rinsing with a cleaning agent such as water or a solvent, or even with the next product.

The disadvantage of this, however, is that, due to contamination with the polymer composition, the cleaning agent must be subjected to a solvent treatment. In the case of not rinsing with a cleaning agent, but using the next product to purify the conduit, often the contaminated part of the product has become unsuitable, and a significant product loss occurs.

The in-situ coating of the inside of conduits can be done by means of a so-called "pig" or ball, which is described in US4798474, among others. Such a "pig" is a somewhat flexible cleaning plug that can be pressed through the conduits. Tubular reactors (DE3233557, US2015315301) and transport conduits (WO0170421, US3543324) can also be cleaned using such a pig. During the cleaning of transport conduits, however, the ball is often displaced by means of the product to be transported. However, there is a risk that residual polyol composition remains in the conduits, which can cause contamination between successive batches of different polyol compositions.

The present invention aims to find a solution for at least some of the above problems.

### SUMMARY OF THE INVENTION

The invention relates to a method for manufacturing and transporting a polyol composition. More particularly, the invention relates to a method according to claim 1, wherein one or more polyols and one or more additional components are placed in a mixing tank with an agitator and mixed to form a polyol composition, wherein the polyol composition is subsequently transported from the mixing tank to a filling device by means of transport conduits, wherein the cleaning of the aforementioned transport conduits takes place by means of the displacement of one or more pigs in these transport conduits. Preferred embodiments of the method are presented in claims 2-8.

Cleaning the transport conduits by moving one or more pigs, also known as "pigging," provides numerous advantages. Firstly, less or no chemical waste is produced compared to chemical cleaning and less or no product loss occurs. The use of one or more pigs will allow the transport conduits to be more quickly and effectively pushed empty and cleaned as such, allowing them to be refilled more quickly and effectively with a subsequent polyol composition without the risk of contamination between successive polyol compositions. Indeed, efficient cleaning avoids contamination during the transport of a first polyol composition and a subsequent polyol composition. These advantages ensure fast and efficient cleaning of the transport conduits, which leads to a decrease in the production costs of the PU polymer composition.

In a second aspect, the invention relates to a device for manufacturing and transporting a polyol composition. More in particular, the invention relates to a device according to claim 9, the device comprising
a. a mixing tank with an agitator, wherein the agitator comprises one or more agitator arms,
b. transport conduits for transporting the polyol composition to a filling device, wherein the transport conduits comprise one or more pigs for cleaning said transport conduits and one or more pig stations for launching and/or receiving the one or more pigs.

Preferred embodiments of the device are set out in claims 10-15.

### DETAILED DESCRIPTION

The invention relates to a method and a device for manufacturing and transporting a polyol composition.

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

The terms 'comprise', 'comprising', 'consist of', 'consisting of', 'provided with', 'have', 'having', 'include', 'including', 'contain', 'containing' are synonyms and are inclusive or open terms that indicate the presence of what follows, and which do not exclude or prevent the presence of other components, characteristics, elements, members, steps, as known from or disclosed in the prior art.

Quoting numerical intervals by endpoints comprises all integers, fractions and/or real numbers between the endpoints, these endpoints included.

In the context of this document, rpm is the abbreviation for revolutions per minute.

In a first aspect, the invention relates to a method for manufacturing and transporting a polyol composition, wherein one or more polyols and one or more additional components are placed in a mixing tank with an agitator and mixed to form a polyol composition, wherein the polyol composition is subsequently transported from the mixing tank to a filling device by means of transport conduits, wherein the cleaning of the aforementioned transport conduits takes place by means of the displacement of one or more pigs in these transport conduits.

Polyurethane foam is a porous, cellular, synthetic material produced from the reaction of polyols and diisocyanates. The structure is a composite of a solid phase and a gas phase. The solid phase consists of polyurethane elastomer, while the gas phase consists of air created by blowing agents.

Polyurethane foam typically comprises six main ingredients: polyols, diisocyanates, blowing agents, surfactants, catalysts, and curatives (cross-linkers and chain extenders). The polyols and diisocyanates react to form the main polymer chain of the polyurethane foam. The blowing agent is responsible for generating gas, which creates the porous structure of the material. The surfactants, catalysts and curatives help stabilize the polymer system and maintain the desired reaction rate of the polymer system. Additives are used to give extra properties that depend on the intended application of the foam.

The production process of polyurethane foam can be divided into two steps: the preparation of the polymer system and the filling process of the individual canisters.

In a first step, one or more polyols and one or more additional components are placed in a mixing tank with an agitator and mixed to form a polyol composition. In addition to one or more polyols, this polyol composition may comprise other components, such as one or more plasticizers, one or more cell openers, one or more surfactants, one or more catalysts, one or more defoamers, one or more acids. In a preferred embodiment, the viscosity of the polyol composition is at most 5000 mPa.s, more preferably at most 4000 mPa.s, even more preferably at most 3000 m Pa.s, even more preferably at most 2000 mPa.s, when measured by a Brookfield viscometer at a temperature of 25°C.

A polyol composition with such a viscosity can be easily transported by means of transport conduits.

A polyol is an organic molecule containing one or more hydroxyl (OH) groups. According to an embodiment, the polyol composition comprises a weight percentage of at least 15% (m/m) of one or more polyols. According to an embodiment, the polyols are selected from the group of polyether (PE) polyols, polyester (PES) polyols, and biological polyols. In a preferred embodiment, the biological polyols are selected from the group of biological triols (such as castor oil).

Polyether polyols are made by the reaction of organic oxides and glycol. In a preferred embodiment, the PE polyols are based on propylene oxide. In a preferred embodiment, the PE polyols are selected from polyether monols, polyether diols and/or polyether triols.

Polyester polyols are made by the polycondensation reaction of dicarboxylic acids/anhydrides and glycols. In a preferred embodiment, the polyester polyols are selected from the group of polyester diols.

In a preferred embodiment, the polyol composition comprises cross-linkers and chain extenders. These are low molecular weight polyols used to cure the polyurethane system. The elastomeric properties of the solid phase of the polyurethane, such as tensile, flexural and tear strength, are derived from the degree of cross-linking and chain elongation.

In a preferred embodiment, the polyol composition comprises one or more surfactants. In a preferred embodiment, the polyol composition comprises a weight percentage of up to 6% m/m of surfactants. Surfactants are additives that help form, stabilize and cure polyurethane foam. The most commonly used are silicone-based surfactants. Silicone-based surfactants perform important functions such as reducing surface tension.

In a preferred embodiment, the polyol composition comprises one or more catalysts, preferably with a weight percentage of between 0.1% and 4% (m/m) of the total polyol composition. In a preferred embodiment, the catalyst comprises a tertiary amine catalyst, such as 2,2'-Dimorpholinodiethyl ether (DMDEE). Catalysts are used to control the reaction rate of the isocyanate and hydroxyl groups and the rate of gas formation. These polymerization and gasification processes must usually occur simultaneously. If the polymerization process is faster than gas formation, the cells tend to remain closed, causing the foam to shrink as it hardens and cools. If gas formation accelerates, the cells expand before the polymer can harden and provide support. The rate of these two reactions must be balanced to obtain uniform open cells.

In a preferred embodiment, the polyol composition comprises one or more plasticizers. In a preferred embodiment, the polyol composition comprises up to 85% m/m of plasticizers.

Once the polyol composition has been sufficiently mixed, the composition is ready to be transported to a filling device by means of transport conduits.

Together with the polyols, diisocyanate compounds form the prepolymer of the polyurethane system. There are two main types of diisocyanate: aliphatic and aromatic. In a preferred embodiment, the diisocyanate is an aromatic diisocyanate. In an embodiment, the diisocyanate is a polymeric diphenylmethane diisocyanate (pMDI). In another embodiment, the diisocyanate is a monomeric diphenylmethane diisocyanate (mMDI).

The di-isocyanate is transported via separate conduits from a storage tank directly to the filling station. There, the polyol composition and the isocyanate component are filled into the filling container independently of each other.

After filling, propellants are added to the filling container, preferably isobutane, propane, difluoroethane (152a) and dimethyl ether (DME).

The transport conduits require regular cleaning. Since the device is preferably used for mixing and filling different polyol compositions, cleaning must for instance take place when changing from a first polymer composition to the next. In the method of the present invention, cleaning of the used transport conduits takes place through the displacement of one or more pigs in the transport conduits, also called "pigging." In a preferred embodiment, the used transport conduits are cleaned by moving one pig in the transport conduits. In a preferred embodiment, the transport conduits have an inner diameter of between 10 mm and 1000 mm, more preferably between 10 mm and 500 mm, more preferably between 50 mm and 100 mm, more preferably between 60 mm and 90 mm, more preferably between 70 mm and 90 mm, such as for example 82.5 mm according to DIN 2430-1. In an embodiment, the transport conduits have an outer diameter of between 10 mm and 1000 mm, more preferably between 10 mm and 500 mm, more preferably between 50 mm and 100 mm, more preferably between 60 mm and 90 mm, more preferably between 70 mm and 90 mm, such as for example 88.9 mm according to DIN 2430-1. In an embodiment, a segment of the transport conduits near the storage tank comprises a pump for pumping the polyol composition and this segment comprises a by-pass line that allows recovery of the polyol composition in the storage tank by means of the pig (since the segment comprising the pump cannot be cleaned by means of a pig).

A pig is a somewhat flexible cleaning plug that can be used for cleaning a transport conduit. The one or more pigs are pressed through the transport conduits by means of a medium, such as a propellant liquid or a propellant gas (for example nitrogen (N₂) or compressed air). In order to have sufficient force to push the pig forward in the transport conduits, the propellant liquid or propellant gas is placed under pressure. In a preferred embodiment, the one or more pigs are moved by means of a propellant gas, preferably compressed air. In a preferred embodiment, the pressure of the propellant gas is at least 2 bar, preferably at least 2.5 bar, such as 2.7 bar. In a preferred embodiment, the pressure of the propellant gas is a maximum of 10 bar, preferably a maximum of 9 bar, preferably a maximum of 8 bar, preferably a maximum of 7 bar, preferably a maximum of 6 bar, preferably a maximum of 5 bar, preferably a maximum of 4 bar, such as for example 2.7 bar. In a preferred embodiment, the pressure of the propellant gas is at least 2 bar and at most 10 bar, preferably at least 2 bar and at most 5 bar, such as 2.7 bar.

In a preferred embodiment, the one or more pigs are pressed through the transport conduits at an average constant speed of between 0.5 meters per second (m/s) and 10 m/s, preferably between 1 m/s and 5 m/s, more preferably between 1 m/s and 4 m/s, more preferably between 1 m/s and 3 m/s, more preferably between 1 m/s and 2 m/s. Too high and/or uncontrolled speed of the pig can lead to injuries or damage to the transport conduits and/or the pig during pigging. A speed that is too low slows down the cleaning procedure. In a preferred embodiment, the one or more pigs are moved at a speed between 1 m/s and 2 m/s by means of compressed air with a pressure of 2.7 bar.

Pigs perform best when they are moved at an almost constant speed, so it is necessary to provide a different means of speed control than a constant input of, for example, a propellant gas. Without this control, the pig may stop at a small obstacle and the pressure behind the pig will increase until the
pig moves. The pig will then move faster until equilibrium is reached and the pig moves again at a constant speed. One way to improve control is to close off the end of the transport conduit (or part of it) downstream, pressurize the entire transport conduit (or part of it) and then, by releasing pressure downstream while introducing air upstream, obtain a constant pressure differential and thus a nearly constant velocity of the pig. In a preferred embodiment, the speed of the pig is controlled on the basis of the pressure in the transport conduits and by opening/closing a valve at the end of the transport conduit (the maximum speed of the pig is limited by closing the valve at the end of the transport conduit).

However, pressure-activated pigs can be pressed so hard against the wall of the transport conduits that they cause permanent deformation and damage thereto. In extreme cases, this can even lead to the pig getting stuck in the transport conduit. It will be apparent that the wall thickness is an important parameter to consider when cleaning transport conduits with a pig. In a preferred embodiment, the transport conduits therefore have a wall thickness between 1 mm and 20 mm, preferably between 1 mm and 10 mm, even more preferably between 1 mm and 5 mm, even more preferably between 2 mm and 4 mm, such as 3.2 mm. As described above, it is important that this wall thickness is sufficiently high to prevent possible deformations and damage to the transport conduits by the pig. On the other hand, this wall thickness should not be too high, as this increases the costs of the transport conduits and makes their assembly more difficult.

In a preferred embodiment, the pressure of the propellant gas with which the one or more pigs are pushed forward is a maximum of 10 bar, preferably a maximum of 9 bar, preferably a maximum of 8 bar, preferably a maximum of 7 bar, preferably a maximum of 6 bar, preferably a maximum of 5 bar, preferably a maximum of 4 bar, such as for instance 2.7 bar, and the transport conduits have a wall thickness of between 2 mm and 4 mm. Conveyor conduits with such a wall thickness are sufficiently strong to be used in combination with a pig that is pushed forward at such a pressure. As described above, this wall thickness must not be too high, as this increases the costs of the transport conduits and makes their assembly more difficult.

In a preferred embodiment, the ratio between the wall thickness of the transport conduits and the inner diameter of the transport conduits is between 0.01 and 0.1, preferably between 0.02 and 0.05, even more preferably between 0.03 and 0.04, such as 0.0388. Such a ratio guarantees a safe (no damage to the transport conduits), yet efficient cleaning of the transport conduits by the one or more pigs.

In a preferred embodiment, the length of the transport conduits is comprised between 1 meter and 1000 meters, even more preferably between 5 meters and 500 meters, even more preferably between 10 meters and 250 meters, even more preferably between 50 meters and 230 meters. In an embodiment, the polyol composition is transported from the storage tank to the filling device by means of the transport conduits. In a preferred embodiment, the polyol composition is first transported from the storage tank to a buffer tank. The device may comprise one or more buffer tanks. In another embodiment, the polyol composition is transported directly from the mixing tank to a buffer tank by means of transport conduits. In a preferred embodiment, the length of the transport conduits between the mixing tank and the one or more buffer tanks is between 150 meters and 300 meters, more preferably between 200 meters and 250 meters, such as 225 meters. In a preferred embodiment, the length of the transport conduits between the one or more buffer tanks and the filling device is between 10 meters and 100 meters, more preferably between 30 meters and 80 meters, such as 60 meters.

In a preferred embodiment, the cleaning of the transport conduits takes place at room temperature.

In an embodiment, when not in use, the one or more pigs are located in a pig station. The pigs are always brought into the conduit system from a first, departing, pig station. The pig station includes at least one connection for the medium with which the pig is pushed forward. At the end of the transport conduit, the pig and the medium are collected in a second, receiving, pig station. In this receiving pig station, the pig is separated from the medium if the medium is a liquid. In an embodiment , the distance that the pig has already traveled is continuously registered. This allows the wear the pig is subject to to be monitored. In a preferred embodiment, an alarm will be generated when a certain value of the distance covered by the pig is reached. This makes it possible to replace or repair the pig in time.

In a preferred embodiment, the one or more pigs move from the mixing tank to the filling device and/or from the filling device to the mixing tank. This allows the pig to return to the pig station of the mixing tank after pushing the transport conduits empty and as such cleaning the transport conduits.

In a preferred embodiment, the polyol composition is not transported directly to the filling device but is transported from the mixing tank via the transport conduits to a storage tank for temporary storage.

By temporarily storing the polyol composition in a storage tank, different polyol compositions can be produced and filled simultaneously. While a first composition is being filled, a subsequent composition can already be produced. As a result, filling and production can proceed more independently of each other. In a preferred embodiment, the transport conduits between the mixing tank and the storage tank are also cleaned by means of the displacement of the one or more pigs therein. Moreover, by providing a storage tank, the transport conduits can be completely cleaned with one or more pigs because the composition can be pushed into the storage tank.

In a subsequent step, the polyol composition is transported from the storage tank to the filling device by means of the transport conduits. In a preferred embodiment, the polyol composition is first transported from the storage tank to a buffer tank. In another embodiment, the polyol composition is transported directly from the mixing tank to the buffer tank by means of transport conduits. In a preferred embodiment, the buffer tank is positioned above the filling device and the polyol composition is transported from the buffer tank by gravity to the filling device.

In a preferred embodiment, the transport conduits between the storage tank or the mixing tank and the buffer tank are also cleaned by means of the displacement of one or more pigs therein. By providing a buffer tank, the polyol composition can be buffered before it is filled, which improves the efficiency of the filling process. In addition, the transport conduits can be completely cleaned with the one or more pigs because the polyol composition can be pushed into the buffer tank.

In a preferred embodiment, the direction of movement of the one or more pigs in the transport conduits is controlled by means of one or more valves. The valves make it possible to close certain compartments in order to control the transport of the pig. In a preferred embodiment, the transport conduits are provided with one or more pressure gauges to determine the pressure in certain compartments of the transport conduits.

In an embodiment, the presence of the one or more pigs at a specific location in the transport conduit is detected by means of a sensor. In an embodiment, the sensor is movable. In an embodiment, the sensor is mounted on the transport conduit by means of a mounting means such as a clamp. In an embodiment, the sensor may transmit signals to a central control system, whereby the central control system controls the various process parameters (such as pressure, opening and closing of valves, addition of solvent, etc.). In a preferred embodiment, however, the pig comprises one or more magnets for detecting and locating the pig in the transport conduits and/or the pig stations.

In a second aspect, the invention relates to a device for manufacturing and transporting a polyol composition, comprising a mixing tank with an agitator, wherein the agitator comprises one or more agitator arms, transport conduits for transporting the polyol composition to a filling device, wherein the transport conduits comprise one or more pigs for cleaning said transport conduits and one or more pig stations for launching and/or receiving the one or more pigs.

In an embodiment, the one or more agitator arms are provided with one or more blades, which promote mixing of the polyol composition. In a further embodiment, the one or more blades are movable along the longitudinal axis of the agitator arm in order to optimize the mixing process in the mixing tank.

In a preferred embodiment, the device comprises one pig for cleaning the transport conduits. The pig can be made of any material known from the prior art, such as foam rubber, hard plastic or metal. In a preferred embodiment, the pig is manufactured from plastic, such as, for example, polyurethane rubber, fluorocarbon rubber (FKM), ethylene propylene terpolymer rubber, acrylonitrile-butadiene rubber. Preferably, the pig is made of fluorocarbon rubber. A pig made from FKM is extremely suitable for cleaning transport conduits that transport a polyol composition, since FKM is compatible with all kinds of polyol formulas and does not absorb them (and therefore does not soften). Other materials often do have this problem. In an embodiment, the pig is provided with protrusions, such as studs or rings, which scrape along the wall of the transport conduit. In an embodiment, the protrusions are made of the same material as the rest of the pig. In another embodiment, the protrusions are made of a different material than the rest of the pig. In a preferred embodiment, the pig is a bi-directional pig. In a further preferred embodiment, the pig has the shape of a double mushroom, whereby both the front and the back of the pig closely connect to the transport conduit to be cleaned, making only minimal contact with the transport conduit. As a result, only minimal friction occurs, while the transport conduits are still cleaned efficiently. To optimize the operation of the pig, it is necessary that the diameter of the pig is in accordance with the diameter of the transport conduit to be cleaned, wherein the maximum diameter of the pig is preferably as large as or slightly larger than the inner diameter of the transport conduit. In a preferred embodiment, the maximum diameter of the pig is at most 150 mm, preferably at most 120 mm, more preferably at most 100 mm, more preferably at most 90 mm, more preferably at most 85 mm, such as for instance 82.5 mm.

In an embodiment, the pig stations form part of the device. In another embodiment, the pig stations are installations that can be connected in a mobile manner. In a preferred embodiment, a transport conduit comprises a pig station at both ends. In this way, the one or more pigs can be sent back and forth. Once from a departing pig station, to clean the used transport conduits, to then arrive at the receiving pig station. From the receiving pig station, the one or more pigs are sent back to the departing pig station, where the one or more pigs can be used again to push the transport conduits empty and as such clean them.

In a preferred embodiment, the device further comprises one or more storage tanks, wherein the one or more storage tanks are connected to the mixing tank and to the filling device by means of the transport conduits. As described above, this offers the advantage that several polyol compositions can be produced and filled simultaneously. Moreover, by providing a storage tank, the transport conduits can be completely cleaned because the composition can be pushed into the storage tank by means of the one or more pigs.

In a preferred embodiment, the device further comprises a buffer tank, wherein the buffer tank is positioned above the filling device. As described above, this offers the advantage that the polyol composition can be buffered before it is filled, and the transport conduits can be completely cleaned because the composition can be pushed into the buffer tank by means of the one or more pigs. In a preferred embodiment, the remaining polyol composition that is still present in the buffer tank is collected after filling and then reintroduced into the storage tank. What is still in the supply conduit is transported or discharged to the storage tank. In a preferred embodiment, the buffer tank is automatically refilled when the level in the buffer tank drops below a predetermined level.

In what follows, the invention is described by way of non-limiting examples illustrating the invention, and which are not intended to and should not be interpreted as limiting the scope of the invention.

### EXAMPLES

### EXAMPLE 1 :

For the preparation of a polyol composition, a composition of 3 different polyether triols, respectively comprising 12% m/m, 9% m/m and 37% m/m of the polyol composition, is placed in a mixing tank with an agitator. Subsequently, two different plasticizers (comprising respectively 33% m/m and 3% m/m of the polyol composition), a cell opener (0.5% of the polyol composition), two different surfactants (comprising respectively 1.9% m/m and 2.5% m/m of the polyol composition) and a catalyst (DMDEE, 1.1% m/m of the polyol composition) are added thereto. The whole is stirred each time after the addition of the various components. The resulting polyol composition is then transported via transport conduits to a storage tank. From the storage tank, the polyol composition is then transported via transport conduits to a buffer tank. The viscosity of the polyol composition is a maximum of 5000 mPa.s, measured by means of a Brookfield viscometer at a temperature of 25°C. A polyol composition with such a viscosity can be smoothly transported through the transport conduits. The transport conduits have an inner diameter of 82.5 mm. The cleaning of the transport conduits is done by means of a pig that is pushed through the conduits. The pig is a bi-directional pig in the shape of a double mushroom, whereby both the front and the back of the pig closely connect to the transport conduit to be cleaned, making only minimal contact with the transport conduit. As a result, only minimal friction occurs, while the transport conduits are still cleaned efficiently. The maximum diameter of the pig corresponds to the diameter of the transport conduits to be cleaned and is 82.5 mm. The pig comprises one or more magnets for detecting and locating the pig in the transport conduits and/or the pig stations. Compressed air at a pressure of 2.7 bar is used as propellant gas to move the pig, wherein the pig is moved at a speed between 1 m/s and 2 m/s. Too high and/or uncontrolled speed of the pig can lead to injury or damage to the transport conduits and/or the pig during pigging. A speed that is too low slows down the cleaning procedure. The transport conduits have a wall thickness of 3.2 mm. Conveyor conduits with such a wall thickness are sufficiently strong to be used in combination with a pig that is pushed forward at such a pressure. It is namely important that the wall thickness is sufficiently high to prevent possible deformations and damage to the transport conduits by the pig. On the other hand, this wall thickness should not be too high, as this increases the costs of the transport conduits and makes their assembly more difficult. The ratio between the wall thickness of the transport conduits and the diameter of the transport conduits is ideally comprised between 0.03 and 0.04. Such a ratio guarantees a safe (no damage to the transport conduits), yet efficient cleaning of the transport conduits by the one or more pigs.

The buffer tank is positioned above the filling device and the polyol composition is transported by gravity from the buffer tank to the filling device and filled into the filling containers, more specifically canisters. A polymeric methylene diphenyl diisocyanate (pMDI) is transported via separate conduits from a storage tank directly to the filling station and is filled into the canisters separately from the polyol composition. After filling the canisters, they are provided with a propellant gas (a composition consisting of isobutane, propane, difluoroethane (152a) and dimethyl ether (DME)). In addition to the advantage of temporary storage, the provision of a storage tank and a buffer tank also offers the advantage that the transport conduits can be completely cleaned because the polyol composition can be pushed completely into the storage tank or buffer tank by means of the pig. By using a pig to clean the transport conduits, no chemical waste is produced and virtually no product loss occurs. In addition, the transport conduits can be pushed empty more quickly and effectively, allowing them to be refilled more quickly and effectively with a subsequent polyol composition without the risk of contamination between successive polyol compositions. Indeed, efficient cleaning avoids contamination during the transport of a first polyol composition and a subsequent polyol composition. These advantages ensure fast and efficient transport of polyol compositions and cleaning of the transport conduits used for this purpose, which leads to a decrease in the production costs of the PU polymer composition.

## Claims

1. Method for manufacturing and transporting a polyol composition, wherein one or more polyols and one or more additional components are placed in a mixing tank with an agitator and mixed to form a polyol composition, wherein the polyol composition is subsequently transported from the mixing tank to a filling device by means of transport conduits, **characterized in that** the cleaning of the aforementioned transport conduits takes place by means of the displacement of one or more pigs in these transport conduits.

2. The method according to claim 1, wherein the one or more pigs are moved by means of a propellant gas, preferably compressed air.

3. The method according to claim 2, wherein the pressure of the propellant gas is at least 2 bar and at most 10 bar.

4. The method according to any of the preceding claims, wherein the one or more pigs are pressed through the transport conduits at a speed between 0.5 meters per second (m/s) and 10 m/s.

5. The method according to any of the preceding claims, wherein the viscosity of the polyol composition is a maximum of 5000 mPa.s, measured by means of a Brookfield viscometer at a temperature of 25°C.

6. The method according to any of the preceding claims, wherein the direction of the movement of the one or more pigs in the transport conduits is controlled by means of one or more valves.

7. The method according to any of the preceding claims, wherein the one or more pigs comprise one or more magnets and wherein the presence of the one or more pigs at a specific location in the transport conduit can be detected by means of these one or more magnets.

8. The method according to any of the preceding claims, wherein the polyol composition is transported from the mixing tank through the transport conduits to a storage tank for temporary storage and wherein the polyol composition is transported from the storage tank to a buffer tank via the transport conduits, wherein the buffer tank is positioned above the filling device and wherein the polyol composition is transported from the buffer tank by gravity to the filling device.

9. Device for manufacturing and transporting a polyol composition by means of a method according to any of the preceding claims 1-8, comprising
a. a mixing tank with an agitator, wherein the agitator comprises one or more agitator arms,
b. transport conduits for transporting the polyol composition to a filling device, wherein the transport conduits comprise one or more pigs for cleaning the aforementioned transport conduits, **characterized in that** the transport conduits further comprise one or more pig stations for launching and/or receiving the one or more pigs.

10. The device according to claim 9, wherein the transport conduits have an inner diameter of between 50 mm and 100 mm.

11. The device according to any of the preceding claims 9-10, wherein the transport conduits have a wall thickness of between 1 mm and 20 mm.

12. The device according to any of the preceding claims, wherein the ratio between the wall thickness of the transport conduits and the diameter of the transport conduits is comprised between 0.01 and 0.1.

13. The device according to any of the preceding claims 9-12, wherein the device comprises one or more storage tanks, wherein the one or more storage tanks are connected to the mixing tank and to the filling device by means of the transport conduits.

14. The device according to any of the preceding claims 9-13, the device comprising a buffer tank, wherein the buffer tank is positioned above the filling device.

15. The device according to any of the preceding claims 9-14, wherein a transport conduit comprises a pig station at both ends.
